# EUROPÄISCHE PATENTSCHRIFT

(11) **EP 1 326 904 B1**
(45) Veröffentlichungstag und Bekanntmachung des Hinweises auf die Patenterteilung: **10.03.2010**
(21) Anmeldenummer: 01986308.3
(22) Anmeldetag: 24.09.2001
(51) Int. Cl.: C08F 279/04, C08L 51/04, C08L 55/02

(54) **VERFAHREN ZUR HERSTELLUNG VON PFROPFKAUTSCHUKLATICES MIT REDUZIERTEM RESTMONOMERENGEHALT**
METHOD FOR PRODUCING GRAFT RUBBER LATICES HAVING A REDUCED RESIDUAL MONOMER CONTENT
PROCEDE DE PREPARATION DE LATEX CAOUTCHOUTEUX GREFFES AYANT UNE TENEUR LIMITEE EN MONOMERES RESIDUELS

(30) Priorität: 06.10.2000 DE 10049466
(43) Veröffentlichungstag der Anmeldung: 16.07.2003
(73) Patentinhaber: Ineos ABS (Jersey) Limited, Whiteley Chambers Don Street St Helier Jersey JE4 9WG Channel Islands (GB)
(72) Erfinder: GASCHE, Hans-Erich, D-51519 Odenthal (DE); EICHENAUER, Herbert, 41539 Dormagen (DE); VANHOORNE, Pierre, 40211 Düsseldorf (DE); JANSEN, Ulrich, 41541 Dormagen (DE); WENZ, Eckhard, 50679 Köln (DE); MOSS, Stefan, 42781 Haan (DE)
(74) Vertreter: Gille Hrabal Struck Neidlein Prop Roos
(86) Internationale Anmeldenummer: PCT/EP2001/011013
(87) Internationale Veröffentlichungsnummer: WO 2002/028931

(56) Entgegenhaltungen:
- EP-A- 0 046 320
- EP-A- 0 281 174
- EP-A- 0 531 848
- EP-A- 0 810 242
- WO-A-00/04068
- WO-A-00/14123
- US-A- 4 200 593
- US-A- 4 800 216

## Beschreibung

Die Erfindung betrifft ein Verfahren zur Herstellung von Pfropfkautschukpolymerisaten vom ABS-Typ durch Emulsionspolymerisation nach dem sogenannten Zulauf-Batch-Verfahren, wobei Latices mit deutlich reduzierten Restmonomergehalten erhalten werden sowie Zusammensetzungen enthaltend die genannten Pfropfkautschukpolymerisate. Dabei weisen die so hergestellten Polymerisate keinerlei negative Beeinträchtigungen der sonstigen Eigenschaften auf.

ABS-Formmassen sind Zweiphasenkunststoffe aus:
I. einem thermoplastischen Copolymerisat aus Styrol und Acrylnitril, in dem das Styrol ganz oder teilweise durch α-Methylstyrol oder Methylmethacrylat ersetzt werden kann; dieses Copolymerisat, auch als SAN-Harz oder Matrix-Harz bezeichnet, bildet die äußere Phase;
II. mindestens einem Pfropfkautschukpolymerisat, (vom ABS-Typ), welches hergestellt worden ist durch Pfropfreaktion eines oder mehrerer der unter I. genannten Monomeren auf Butadienhomo- oder -copolymerisat ("Pfropfgrundlage"). Dieses Pfropfpolymerisat ("Elastomerphase" oder "Pfropfkautschuk") bildet die disperse Phase im Matrix-Harz.

Während das Matrix-Harz I leicht durch radikalische Polymerisation in Lösung oder Suspension oder durch Massepolymerisation hergestellt werden kann, muß man zur Erzeugung glänzender Formteile das Pfropfkautschukpolymerisat II durch Emulsionspolymerisation unter Verwendung von Kautschuklatices mit den erforderlichen mittleren Teilchendurchmessern herstellen, um definierte feinteilige Polymerisate mit mittleren Teilchendurchmessern d₅₀ von ca. 0,08 bis 0,5 µm zu erhalten.

Ein kritischer Punkt bei der Emulsionspolymerisation, insbesondere bei der Herstellung kautschukhaltiger Pfropfpolymerisate unter Anwendung des sogenannten Zulauf-Batch-Verfahrens (Zulauf der Monomeren zu einem im Reaktor befindlichen Kautschuklatex im Verlauf einer Batch-Reaktion), ist der oft sehr hohe Gehalt an nicht umgesetzten Monomeren am Ende der Reaktion.

Zwar werden in der Literatur Methoden zur Absenkung des Restmonomerengehaltes in Emulsionspolymerisaten angegeben, zur Erzielung niedriger Restmonomerwerte bei Pfropfkautschukpolymerisaten unter Erhalt der benötigten sonstigen Eigenschaften sind diese jedoch nicht geeignet.

So beschreibt z.B. die DE-A 19741 188 die Verwendung langkettiger, oberflächenaktiver Initiatorkomponenten zur Reduzierung der Restmonomeren. WO-A 00/12569 empfiehlt die Verwendung von Kombinationen aus einem Oxidationsmittel, einem aus Aldehyd und anorganischem Dithionit hergestellten Reduktionsmittel und mehrwertigen Metallionen zur Behandlung von Polymerdispersionen, während in WO-A 00/14123 die Behandlung mit einem Initiatorsystem aus einem Oxidationsmittel und einer α-Hydroxycarbonylverbindung beschrieben wird. Alle diese Maßnahmen benötigen jedoch den Einsatz neuer Hilfsstoffkomponenten, wodurch in der Regel die Eigenschaften der Pfropffsautschukpolymerisate in unerwünschter Weise verändert werden.

US 4200593 beschreibt ein Verfahren zur Herstellung von Pfropfkautschukpolymerisaten vom ABS-Typ durch Dispersionspolymerisation.

EP 0281174 beschreibt ein Verfahren auf Basis von 2 Stufen zur Polymerisation von Vinylaromat und Acrylnitril in Gegenwart von Polybutadienkautschuk.

EP 0046320, EP 0531848 und WO 0004068 beschreiben ein Verfahren zur Polymerisation von Vinylaromat, Acrylnitril und Polybutadien.

Es wurde nun gefunden, dass Pfropfkautschukpolymerisate vom ABS-Typ durch Emulsionspolymerisation nach dem Zulauf-Batch-Verfahren mit deutlich reduzierten Restmonomergehalten unter Verwendung üblicher radikalischer Initiatorsysteme ohne Zusatz neuartiger Substanzen hergestellt werden können, wenn während der Reaktion eine spezielle Art der Zugabe der Initiatorkomponenten eingehalten wird.

Gegenstand der Erfindung ist ein Verfahren zur Herstellung von Pfropfkautschukpolymerisaten vom ABS-Typ durch Emulsionspolymerisation nach dem Zulauf-Batch-Verfahren, dadurch gekennzeichnet, dass der zur Polymerisationsauslösung verwendete radikalische Initiator bzw. das verwendete Initiatorsystem portionsweise oder kontinuierlich derart zum Reaktionsgemisch gegeben wird, dass im Verlauf der Reaktion ein Minimum an zudosiertem Initiator bzw. Initiatorsystem pro Zeitintervall durchlaufen wird und in mindestens 50%, vorzugsweise mindestens 70 % und besonders bevorzugt mindestens 90% der Gesamtreaktionszeit die in jedem Zeitintervall zugegebene Initiatormenge mindestens einem Anteil ≥ 0,5 Gew.-%, vorzugsweise ≥ 1 Gew.-% und besonders bevorzugt ≥ 2,5 Gew.-% der Gesamtinitiatormenge entspricht, wobei die Gesamtreaktionszeit n Zeitintervalle mit n = 3 bis 20, vorzugsweise 3 bis 15 und besonders bevorzugt 3 bis 10 umfasst und jedes Zeitintervall 5 bis 90 Minuten, vorzugsweise 10 bis 80 Minuten und besonders bevorzugt 15 bis 60 Minuten lang ist.

In einer bevorzugten Ausführungsform der Erfindung wird das Minimum an zugegebenem Initiator bzw. Initiatorsystem pro Zeitintervall in der ersten Hälfte der Gesamtreaktionszeit durchlaufen.

Ebenfalls bevorzugt wird das Minimum im ersten oder zweiten Drittel der Gesamtreaktionszeit durchlaufen.

Die praktische Durchführung des erfindungsgemäßen Verfahrens erfolgt üblicherweise durch Vorlage eines Kautschuklatex oder einer Mischung mehrerer Kautschuklatices in einem gerührten Reaktor, Aufheizen des Reaktorinhalts auf eine zur Polymerisationsauslösung mit radikalischen Initiatoren geeignete Temperatur, Zugabe des radikalischen Initiators in der oben angegebenen Weise, Zudosieren der Pfropfmonomeren sowie gegebenenfalls paralleles Zudosieren einer wässrigen Emulgatorlösung.

Als Kautschuke bei Verwendung des erfindungsgemäßen Verfahrens zur Herstellung von Pfropfkautschukpolymerisaten eignen sich im Prinzip alle in Emulsionsform vorliegenden kautschukartigen Polymerisate mit einer Glasübergangstemperatur unter 0°C.

Verwendet werden können z.B.
- Dienkautschuke, d.h. Homopolymerisate von konjugierten Dienen mit 4 bis 8 C-Atomen wie beispielsweise und bevorzugt Butadien, Isopren, Chloropren oder deren Copolymerisate mit bis zu 60 Gew.-%, bevorzugt bis zu 30 Gew.-% eines Vinylmonomeren, z.B. und bevorzugt Acrylnitril, Methacrylnitril, Styrol, α-Methylstyrol, Halogenstyrole, C₁-C₄-Alkylstyrole, C₁-C₈-Alkylacrylate, C₁-C₈-Alkylmethacrylate, Alkylenglykoldiacrylate, Alkylenglykol-dimethacrylate, Divinylbenzol;
- Acrylatkautschuke, d.h. Homo- und Copolymerisate von C₁-C₁₀-Alkylacrylaten, z.B. und bevorzugt Homopolymerisate von Ethylacrylat, Butylacrylat oder Copolymerisate mit bis zu 40 Gew.-%, bevorzugt nicht mehr als 10 Gew.-% Mono- Vinylmonomeren, z.B. und bevorzugt Styrol, Acrylnitril, Vinylbutylether, Acrylsäure(ester), Methacrylsäure(ester), Vinylsulfonsäure. Bevorzugt werden solche Acrylatkautschukhomo- bzw. -copolymerisate eingesetzt, die 0,01 bis 8 Gew.-% Divinyl- oder Polyvinylverbindungen und/oder N-Methylolacrylamid bzw. N-Methylolmethacrylamid oder sonstige Verbindungen enthalten, die als Vernetzer wirken, z.B. Divinylbenzol und bevorzugt Triallylcyanurat.

Bevorzugt sind Polybutadienkautschuke, SBR-Kautschuke mit bis zu 30 Gew.-% einpolymerisiertem Styrol und Acrylatkautschuke, besonders solche, die eine Kern-Schalen-Struktur aufweisen, z.B. wie in DE-A 3 006 804 beschrieben.

Zur Herstellung von Pfropflcautschukpolymerisaten nach dem erfindungsgemäßen Verfahren kommen Latices mit mittleren Teilchendurchmessern d₅₀ von 0,05 bis 2,0 µm, vorzugsweise von 0,08 bis 1,0 µm und besonders bevorzugt von 0,1 bis 0,5 µm, in Betracht. Die Gelgehalte der eingesetzten Kautschuke können in weiten Grenzen variiert werden, vorzugsweise liegen sie zwischen 30 und 95 Gew.-% (Bestimmung nach der Drahtkäfigmethode in Toluol.

Ganz besonders bevorzugt sind Mischungen von Kautschuklatices mit
a) mittleren Teilchendurchmessern d₅₀ ≤ 320 nm, vorzugsweise 260 bis 310 nm, und Gelgehalten <70 Gew.-%, vorzugsweise 40 bis 65 Gew.-% und
b) mittleren Teilchendurchmessern d₅₀ ≥370 nm, vorzugsweise 380 bis 450 nm, und Gelgehalten ≥70 Gew.-%, vorzugsweise 75 bis 90 Gew.-%.

Dabei hat der Kautschuklatex (a) vorzugsweise eine Breite der Teilchengrößenverteilung von 30 bis 100 nm, besonders bevorzugt von 40 bis 80 nm, der Kautschuklatex (b) von 50 bis 500 nm, besonders bevorzugt von 100 bis 400 nm (jeweils gemessen als d₉₀-d₁₀-Wert aus der integralen Teilchengrößenverteilung).

Die Mischungen enthalten die Kautschuklatices (a) und (b) vorzugsweise im Gewichtsverhältnis 90:10 bis 10:90, besonders bevorzugt 60:40 bis 30:70 (jeweils bezogen auf den jeweiligen Feststoffanteil der Latices).

Die mittleren Teilchendurchmesser werden mittels Ultrazentrifuge (vgl. W. Scholtan, H. Lange : Kolloid-Z. u Z. Polymere 250, S. 782-796 (1972) bestimmt.

Die angegebenen Werte für den Gelgehalt beziehen sich auf die Bestimmung nach der Drahtkäfigmethode in Toluol (vgl. Houben- Weyl, Methoden der Organischen Chemie, Makromolekulare Stoffe, Teil 1, S. 307 (1961), Thieme Verlag Stuttgart).

Die verwendeten Kautschuklatices können durch Emulsionspolymerisation hergestellt werden, die erforderlichen Reaktionsbedingungen, Hilfsstoffe und Arbeitstechniken sind grundsätzlich bekannt.

Es ist auch möglich, nach bekannten Methoden zunächst ein feinteiliges Kautschukpolymerisat herzustellen und es anschließend in bekannter Weise zur Einstellung der erforderlichen Teilchengröße zu agglomerieren. Einschlägige Techniken sind beschrieben (vgl. EP-A 0 029 613; EP-A 0 007 810; DD-A 144 415; DE-A 12 33 131; DE-A 12 58 076; DE-A 21 01 650; US-A 1 379 391).

Ebenfalls kann nach der sogenannten Saatpolymerisationstechnik gearbeitet werden, bei der zunächst z.B. ein feinteiliges Butadienpolymerisat hergestellt und dann durch Weiterumsatz mit Butadien enthaltenden Monomeren zu größeren Teilchen weiterpolymerisiert wird.

Als Emulgatoren können die üblichen anionischen Emulgatoren wie Alkylsulfate, Alkylsulfonate, Aralkylsulfonate, Seifen gesättigter oder ungesättigter Fettsäuren (z.B. Ölsäure, Stearinsäure) sowie alkalischer disproportionierter oder hydrierter Abietin- oder Tallölsäure verwendet werden, vorzugsweise werden Emulgatoren mit Carboxylgruppe (z.B. Salze von C₁₀-C₁₈-Fettsäuren, disproportionierte Abietinsäure, Emulgatoren gemäß DE-A 36 39 904 und DE-A 39 13 509) eingesetzt.

Prinzipiell kann man Kautschukpolymerisatlatices auch herstellen durch Emulgieren von fertigen Kautschukpolymerisaten in wässrigen Medien (vgl. japanische Patentanmeldung JP-A 55 125 102).

Als Pfropfmonomere, die in Gegenwart der in Emulsionsform vorliegenden kautschukartigen Polymerisate polymerisiert werden, sind praktisch alle Verbindungen geeignet, die in Emulsion zu thermoplastischen Harzen polymerisiert werden können, z.B. Vinylaromaten der Formel (I) oder Verbindungen der Formel (II) bzw. deren Gemische, 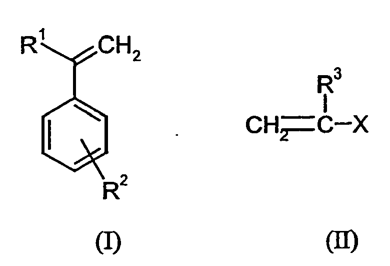 in welchen
- R¹: Wasserstoff oder Methyl,
- R²: Wasserstoff, Halogen oder Alkyl mit 1 bis 4 Kohlenstoffatomen in ortho-, meta- oder para-Stellung,
- R³: Wasserstoff oder Methyl
und
- X: CN, R⁴OOC oder R⁵R⁶NOC darstellt,
worin
R⁴ Wasserstoff oder Alkyl mit 1 bis 4 Kohlenstoffatomen; und
R⁵ und R⁶ unabhängig voneinander Wasserstoff, Phenyl oder Alkyl mit 1 bis 4 Kohlenstoffatomen bedeuten.

Beispielhaft und bevorzugt für Verbindungen der Formel (I) seien Styrol, α-Methylstyrol, p-Methylstyrol und Vinyltoluol genannt. Bevorzugte Verbindungen der Formel (II) sind Acrylnitril und Methylmethacrylat. Weitere prinzipiell geeignete Monomere sind z.B. Vinylacetat und N-Phenylmaleinimid.

Bevorzugte Monomere sind Mischungen aus Styrol und Acrylnitril, α-Methylstyrol und Acrylnitril, aus Styrol, Acrylnitril und Methylmethacrylat sowie Kombinationen dieser Monomerengemische mit N-Phenylmaleinimid.

Bevorzugte erfindungsgemäß hergestellte Pfropfpolymerisate sind solche, die durch Pfropfpolymerisation von Styrol und Acrylnitril im Gew.-Verhältnis 90:10 bis 50:50, vorzugsweise 80:20 bis 65:35 (wobei Styrol ganz oder teilweise ersetzt werden kann durch α-Methylstyrol oder Methylmethacrylat) in Gegenwart von solchen Mengen Kautschuk, vorzugsweise Polybutadien, erhalten werden, dass Pfropfpolymerisate mit Kautschukgehalten von 30 bis 80 Gew.-%, vorzugsweise 35 bis 75 Gew.-% und besonders bevorzugt 35 bis 70 Gew.-% resultieren.

Als Initiatoren kommen anorganische und organische Peroxide, z.B.H₂O₂, Di-tert.-Butylperoxid, Cumolhydroperoxid, Dicyclohexylpercarbonat, p-Menthanhydroperoxid, tert.-Butylhydroperoxid, Azoinitiatoren wie z.B. Azobisisobutyronitril, anorganische Persalze wie Kaliumperoxodisulfat, Natriumperoxodisulfat, Ammoniumperoxodisulfat, Kaliumperphosphat, Natriumperborat sowie Redox-Systeme in Betracht, die sich aus einem -in der Regel organischen - Oxidationsmittel und einem Reduktionsmittel zusammensetzen, wobei im Reaktionsmedium zusätzlich Schwermetallionen vorhanden sein können (siehe H. Logemann in Houben-Weyl, Methoden der organischen Chemie, Bd. 14/1, S. 263-297).

Bevorzugte Initiatoren sind Kaliumperoxodisulfat, Natriumperoxodisulfat, Ammoniumperoxodisulfat oder Mischungen daraus sowie Cumolhydroperoxid, p-Menthanhydroperoxid, tert.-Butylhydroperoxid oder Mischungen daraus.

Erfindungsgemäß einsetzbare Reduktionsmittel sind vorzugsweise wasserlösliche Verbindungen mit reduzierender Wirkung, vorzugsweise ausgewählt aus der Gruppe der Salze von Sulfinsäure, Salze der schwefligen Säure, Natriumdithionit, Natriumsulfit, Natriumhyposulfit, Natriumhydrogensulfit, Ascorbinsäure sowie deren Salze, Rongalit C (Natriumformaldehydsulfoxylat), Mono- und Dihydroxyaceton, Zucker (z.B. Glucose oder Dextrose). Prinzipiell möglich ist auch die Verwendung von z.B. Eisen(II)-salzen wie z.B. Eisen(II)-sulfat, Zinn(II)-salzen wie z.B. Zinn(II)-chlorid, Titan(III)-salze wie Titan(III)-sulfat; vorzugsweise werden jedoch keine derartigen Metallsalze verwendet.

Besonders bevorzugte Reduktionsmittel sind Dextrose, Ascorbinsäure(salze) oder Natriumformaldehydsulfoxylat (Rongalit C).

Die Reaktionstemperatur bei der Anwendung des erfindungsgemäßen Verfahrens zur Herstellung von Pfropfkautschukpolymeren kann in weiten Grenzen variiert werden. Sie beträgt im allgemeinen 25°C bis 160°C, vorzugsweise 40°C bis 90°C und besonders bevorzugt 50°C bis 85°C. Dabei wird die Pfropfpolymerisation so durchgeführt, dass der Temperaturunterschied zwischen Beginn und Ende der Reaktion mindestens 10°C, vorzugsweise mindestens 15°C und besonders bevorzugt mindestens 20°C beträgt.

Zusammen mit den Pfropmonomeren können 0,05 bis 1,00 Gew.-Teile (pro 100 Gew.-Teile Pfropfmonomer), vorzugsweise 0,08 bis 0,8 Gew.-Teile (pro 100 Gew.-Teile Pfropfmonomer) eines oder mehrerer Mercaptane zugegeben werden.

Geeignete Mercaptane sind z. B. aliphatische Mercaptane wie Ethyl-, n-Propyl-, n-Butyl-, tert.-Butyl-, n-Pentyl-, n-Hexyl-, n-Octyl-, n-Decyl-, n-Dodecyl-, tert.-Dodecyl-, n-Hexadecyl- und n-Octadecylmercaptan oder aromatische Mercaptane wie Thiophenol. Bevorzugte Mercaptane sind tert.-Dodecylmercaptan und n-Dodecylmercaptan und deren Gemische.

Prinzipiell können auch andere molekulargewichtsregelnde Substanzen wie z.B. dimeres α-Methylstyrol oder Terpinolen in Mengen von 0,5 bis 5 Gew.-Teilen, vorzugsweise 1 bis 3 Gew.-Teilen (jeweils pro 100 Gew.-Teile Pfropfmonomer) eingesetzt werden.

Als Emulgator bei der Pfropfpolymerisationsreaktion können die obengenannten Verbindungen eingesetzt werden.

Nach dem erfindungsgemäßen Verfahren wird der gewünschte Effekt einer reduzierten Restmonomerenmenge am Ende der Pfropfpolymerisationsreaktion unter Verwendung gängiger radikalischer Initiatorsysteme erreicht, wenn das Initiatorsystem portionsweise oder kontinuierlich derart zum Reaktionsgemisch gegeben, daß im Verlauf der Reasktion ein Minimum an zudosiertem Initiator durchlaufen wird.

Als besonders wirksam wurde ein Durchlaufen des Minimums in der ersten Hälfte der Gesamtreaktionszeit oder im ersten oder zweiten Drittel der Gesamtreaktionszeit gefunden.

Die nach dem erfindungsgemäßen Verfahren hergestellten Pfropfkautschukpolymerisate besitzen vorzugsweise einen Kautschukgehalt von 30 bis 80 Gew.-%, besonders bevorzugt von 35 bis 75%.

Zur Erzeugung von thermoplastischen Formmassen wird das erfindungsgemäß hergestellte, nach üblicher Aufarbeitung (z.B. durch Koagulation mit Salzen und/oder Säuren, Waschen und Trocknen oder durch Sprühtrocknung) vorliegende Pfropfkautschukpolymerisat mit mindestens einem kautschukfreien Matrixharz abgemischt.

Als kautschukfreie Copolymerisate werden vorzugsweise Copolymerisate des Styrols und Acrylnitrils im Gewichtsverhältnis 95:5 bis 50:50 verwendet, wobei Styrol und/oder Acrylnitril ganz oder teilweise durch α-Methylstyrol, Methylmethacrylat oder N-Phenylmaleinimid ersetzt werden kann.

Besonders bevorzugt sind Copolymerisate mit Anteilen an eingebauten AcrylnitrilEinheiten <30 Gew.-%.

Diese Copolymerisate besitzen vorzugsweise mittlere Molekulargewichte M̅_{w} von 20 000 bis 200 000 bzw. Grenzviskositäten [η] von 20 bis 110 ml/g (gemessen in Dimethylformamid bei 25°C).

Einzelheiten zur Herstellung dieser Harze sind beispielsweise in der DE-AS 2 420 358 und der DE-AS 2 724 360 beschrieben. Durch Masse- bzw. Lösungspolymerisation hergestellte Vinylharze haben sich besonders bewährt. Die Copolymerisate können allein oder in beliebiger Mischung zugesetzt werden.

Außer aus Vinylmonomeren aufgebauten Thermoplastharzen ist auch die Verwendung von Polykondensaten z.B. aromatischen Polycarbonaten, aromatischen Polyestercarbonaten, Polyestern, Polyamiden als kautschukfreies Copolymerisat in den erfindungsgemäßen Formmassen möglich.

Geeignete thermoplastische Polycarbonate und Polyestercarbonate sind bekannt (vgl. z.B. DE-A 1 495 626, DE-A 2 232 877, DE-A 2 703 376, DE-A 2 714 544, DE-A 3 000 610, DE-A 3 832 396, DE-A 3 077 934), z.B. herstellbar durch Umsetzung von Diphenolen der Formeln (III) und (IV) 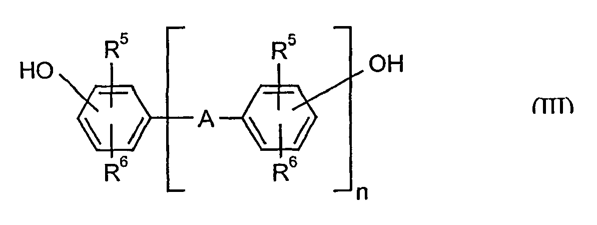 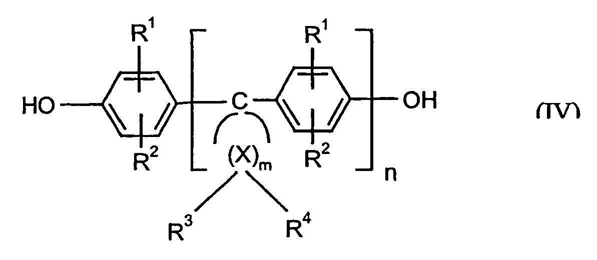 worin
- A: eine Einfachbindung, C₁-C₅-Alkylen, C₂-C₅-Alkyliden, C₅-C₆-Cycloalkyliden, -O-, -S-, -SO-, -SO₂- oder -CO- ist,
- R⁵ und R⁶: unabhängig voneinander für Wasserstoff, Methyl oder Halogen, insbesondere für Wasserstoff, Methyl, Chlor oder Brom stehen,
- R¹ und R²: unabhängig voneinander Wasserstoff, Halogen bevorzugt Chlor oder Brom, C₁-C₈-Alkyl, bevorzugt Methyl, Ethyl, C₅-C₆-Cycloalkyl, bevorzugt Cyclohexyl, C₆-C₁₀-Aryl, bevorzugt Phenyl, oder C₇-C₁₂-Aralkyl, bevorzugt Phenyl-C₁-C₄-alkyl, insbesondere Benzyl, bedeuten,
- m: eine ganze Zahl von 4 bis 7, bevorzugt 4 oder 5 ist,
- n: 0 oder 1 ist,
- R³ und R⁴: für jedes X individuell wählbar sind und unabhängig voneinander Wasserstoff oder C₁-C₆-Alkyl bedeuten und
- X: Kohlenstoff bedeutet,

mit Kohlensäurehalogeniden, vorzugsweise Phosgen, und/oder mit aromatischen Dicarbonsäuredihalogeniden, vorzugsweise Benzoldicarbonsäuredihalogeniden, durch Phasengrenzflächen-Polykondensation oder mit Phosgen durch Polykondensation in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (III) und (IV) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-trimethylcyclopentan.

Bevorzugte Diphenole der Formel (III) sind 2,2-Bis-(4-hydroxyphenyl)-propan und 1,1-Bis-(4-hydroxyphenyl)-cyclohexan, bevorzugtes Phenol der Formel (IV) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-OS 2 842 005, Monoalkylphenole, Dialkylphenole mit insgesamt 8 bis 20 C-Atomen in den Alkylsubstituenten gemäß DE-OS 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (III) und (IV).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte (M̅_{w}, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, d.h., Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12C-Atomen oder cycloaliphatischer Diole mit 6 bis 12C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethyl-cyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestem) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin. und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diamino-dicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus

| | |
|---|---|
| 70 bis 99 | Mol-% des 4,4'-Diamino-Isomeren |
| 1 bis 30 | Mol-% des 2,4'-Diamino-Isomeren |
| 0 bis 2 | Mol-% des 2,2'-Diamino-Isomeren und |

gegebenenfalls entsprechend höher kondensierten Diaminen, die durch Hydrierung von Diaminodiphenylinethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Dabei werden die erfindungsgemäß hergestellten Pfropfkautschuke in Mengen von 1 bis 80 Gew.-%, bezogen auf die gesamte Formmasse, eingesetzt.

Zur Herstellung der Formmassen kann das erfindungsgemäß hergestellte Pfropfkautschukpolymerisat mit dem Matrixharz auf verschiedene Weise gemischt werden. Wird das Matrixharz durch Emulsionspolymerisation hergestellt,so können die Latices gemischt und gemeinsam ausgefällt oder auch getrennt ausgefällt und die resultierenden Festsubstanzen gemischt werden.

Wird z.B. das Matrixharz durch Lösungs- oder Massepolymerisation hergestellt, so muß das Pfropfkautschukpolymerisat getrennt ausgefällt werden. Hierzu verwendet man bekannte Verfahren, beispielsweise Zusatz von Salzen und/oder Säuren, wonach die Fällprodukte gewaschen, getrocknet und gegebenenfalls aus der Pulverform in eine Granulatform überführt werden. Als Mischvorrichtungen für Fällprodukte bzw. Granulate kommen z.B. Mehrwalzenstühle, Mischextruder oder Innenkneter in Betracht.

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern, etc.), Farbmittel.

Die Endverformung kann auf handelsüblichen Verarbeitungsaggregaten vorgenommen werden und umfaßt z.B. Spritzgießverarbeitung, Plattenextrusion mit gegebenenfalls anschließender Warmverformung, Kaltverformung, Extrusion von Rohren und Profilen, Kalander-Verarbeitung.

### Beispiele

### Beispiele A (Redox-Initiierung)

58 Gew.-Teile (gerechnet als Feststoff) eines Polybutadienlatexgemisches (50 Gew.-% mit einem mittleren Teilchendurchmesser d₅₀ von 398 nm und einem Gelgehalt von 73 Gew.-% und 50 Gew.-% mit einem mittleren Teilchendurchmesser d₅₀ von 282 nm und einem Gelgehalt von 58 Gew.-%, beide hergestellt durch radikalische Polymerisation) werden mit Wasser auf einen Feststoffgehalt von ca. 20 Gew.-% gebracht. Danach wird auf 59°C erwärmt und innerhalb von 240 Minuten werden parallel 42 Gew.-Teile eines Monomerengemisches (Styrol/Acrylnitril = 73:27) und 1,72 Gew.-Teile (gerechnet als Festsubstanz) des Natriumsalzes eines Harzsäuregemisches (Dresinate 731, Abieta Chemie GmbH, Gersthofen) gelöst im alkalisch eingestelltem Wasser zudosiert. Außerdem werden beginnend mit dem Zeitpunkt der Monomerenzudosierung innerhalb von 540 Minuten parallel 0,31 Gew.-Teile tert.-Butylhydroperoxid und 0,38 Gew.-Teile Natriumascorbat (als wässrige Lösung) gemäß Tabelle 1 zudosiert. Die Reaktionstemperatur wird innerhalb der ersten 5 h auf 85°C angehoben und dann bei diesem Wert gehalten.

Am Ende der Reaktion wird der Latex auf 23°C abgekühlt; anschließend werden die Restmonomere gaschromatographisch nach der Head-Space-Technik ermittelt. Die Werte sind ebenfalls in Tabelle 1 angegeben.

Daraus ist ersichtlich, dass bei Anwendung des erfindungsgemäßen Verfahrens Pfropfkautschuklatices mit drastisch verminderten Restmonomerengehalten erhalten werden.

Zur Überprüfung der Eigenschaften von Formmassen enthaltend die Pfropfkautschukpolymerisate A (Beispiel 1 bis 3 und Vergleichsbeispiele 4 und 5) wurden die am Ende der Reaktion erhaltenen Pfropflatices nach Zugabe von ca. 1 Gew.-Teil eines phenolischen Antioxidans mit einem Magnesiumsulfat/Essigsäure-Gemisch koaguliert und nach dem Waschen mit Wasser das resultierende Pulver bei 70°C getrocknet.

23,8 Gew.-Teile der Pfropfkautschukpulver wurden mit 32,7 Gew.-Teilen eines Styrol/Acrylnitril = 72:28-Copolymerharzes M̅_{w} ≅ 85000), 42,6 Gew.-Teile eines linearen aromatischen Polycarbonats aus 2,2-Bis-(4-hydroxyphenyl)-propan (Bisphenol A) mit einer relativen Viskosität von 1,26 (gemessen in CH₂Cl₂ bei 25°C in Form einer 0,5 gew.-%igen Lösung), entsprechend einem M̅_{w} von ca. 25000 und 0,75 Gew.-Teilen Pentaerythrittetrastearat in einem Innenkneter vermischt und anschliessend bei 260°C zu Prüfkörpern verarbeitet.

Die nach Methode ISO 180 1A an Stäben der Abmessung 80x10x4 mm bei Raumtemperatur bestimmte Kerbschlagzähigkeit lag in einem Bereich zwischen 60 und 65 kJ/m², die Schmelzfließfähigkeit MVR nach Methode DIN 53 753 bei 260°C (5kg Belastung) lag zwischen 5,1 und 5,5; alle Formteile zeigten einen gleichmäßigen hohen Oberflächenglanz.

Aus diesen Ergebnissen ist ersichtlich, dass das erfindungsgemäße Verfahren zur Pfropfkautschukherstellung keine negativen Auswirkungen auf die Eigenschaften der Pfropfkautschukpolymerisate oder sie enthaltende Produkte hat.

### Beispiele B (Kaliumperoxodisulfat-Initiierung)

50 Gew.-Teile (gerechnet als Feststoff) eines Polybutadienlatex mit einem mittleren Teilchendurchmesser d₅₀ von 127 nm und einem Gelgehalt von 90 Gew.-% (hergestellt durch radikalische Polymerisation) werden mit Wasser auf einen Feststoffgehalt von ca. 20 Gew.-% gebracht. Danach wird auf 59°C erwärmt und innerhalb von 360 Minuten werden parallel 50 Gew.-Teile eines Monomerengemisches (Styrol/Acrylnitril = 73:27) und 1,34 Gew.-Teile (gerechnet als Festsubstanz) des Natriumsalzes eines Harzsäuregemisches (Dresinate 731, Abieta Chemie GmbH, Gersthofen) gelöst im alkalisch eingestelltem Wasser zudosiert. Außerdem werden beginnend mit dem Zeitpunkt der Monomerenzudosierung innerhalb von 540 Minuten parallel 0,5 Gew.-Teile Kaliumperoxodisulfat (gelöst in Wasser) gemäß Tabelle 2 zudosiert. Die Reaktionstemperatur wird innerhalb der ersten 6 h auf 82°C angehoben und dann bei diesem Wert gehalten.

Am Ende der Reaktion wird der Latex auf 23°C abgekühlt; anschließend werden die Restmonomere gaschromatographisch nach der Head-Space-Technik ermittelt. Die Werte sind ebenfalls in Tabelle 2 angegeben.

Auch hier ist deutlich zu erkennen, dass das erfindungsgemäße Verfahren deutlich abgesenkte Restmonomerengehalte liefert.

**Tabelle 1**

| Initiatorzugabe bei der Herstellung der Pfropfkautschukpolymerisate durch Redox- Initiierung und resultierende Restmonomerengehalte | | | | | | | | | | | |
|---|---|---|---|---|---|---|---|---|---|---|---|
| Beispiel | Zugabe des Initiators (%) | | | | | | | | | Restmonomere | |
| | 1 h | 2 h | 3 h | 4 h | 5 h | 6 h | 7 h | 8 h | 9 h | Styrol (ppm) | Acrylnitril (ppm) |
| 1 | 21 | 7 | 7 | 8 | 9 | 10 | 11 | 12 | 15 | 650 | 120 |
| 2 | 30 | 10 | 5 | 5 | 5 | 6 | 10 | 13 | 16 | 550 | 110 |
| 3 | 16 | 13 | 10 | 6 | 5 | 5 | 5 | 10 | 30 | 1160 | 150 |
| 4 (Vergleich) | 12 | 11 | 11 | 11 | 11 | 11 | 11 | 11 | 11 | 6410 | 550 |
| 5 (Vergleich) | 30 | 10 | 5 | 0 | 0 | 10 | 10 | 15 | 20 | 5260 | 540 |

**Tabelle 2**

| Initiatorzugabe bei der Herstellung der Pfropfkautschukpolymerisate durch Kaliumperoxodisulfat-Initiierung und resultierende Restmonomerengehalte | | | | | | | | | | | |
|---|---|---|---|---|---|---|---|---|---|---|---|
| Beispiel | Zugabe des Initiators (%) | | | | | | | | | Restmonomere | |
| | 1 h | 2 h | 3 h | 4 h | 5 h | 6 h | 7 h | 8 h | 9 h | Styrol (ppm) | Acrylnitril (ppm) |
| 6 | 45 | 4 | 4 | 5 | 7 | 7 | 8 | 9 | 9 | 2600 | 80 |
| 7 | 30 | 10 | 5 | 5 | 5 | 6 | 10 | 13 | 16 | 2850 | 110 |
| 8 | 35 | 15 | 7 | 6 | 5 | 4 | 8 | 10 | 10 | 3100 | 90 |
| 9 (Vergleich) | 100 | -- | -- | -- | -- | -- | -- | -- | -- | 5100 | 450 |
| 10 (Vergleich) | 12 | 11 | 11 | 11 | 11 | 11 | 11 | 11 | 11 | 4650 | 410 |

## Patentansprüche

1. Verfahren zur Herstellung von Pfropfkautschukpolymerisaten vom ABS-Typ durch Emulsionspolymerisation nach dem Zulauf-Batch-Verfahren, **dadurch gekennzeichnet, dass** der zur Polymerisationsauslösung verwendete Initiator bzw. das verwendete Initiatorsystem portionsweise oder kontinuierlich derart zum Reaktionsgemisch zugegeben werden, dass im Verlauf der Reaktion ein Minimum an pro Zeitintervall zugegebenem Initiator bzw. Initiatorsystem durchlaufen wird und in mindestens 50% der Gesamtreaktionszeit die in jedem Zeitintervall zugegebene Initiatormenge mindestens einem Anteil ≥ 0,5 Gew.% der Gesamtinitiatormenge entspricht, wobei die Gesamtreaktionszeit n Zeitintervalle mit n = 3 bis 20 umfasst und jedes Zeitintervall 5 bis 90 Minuten lang ist.

2. Verfahren zur Herstellung von Pfropfkautschukpolymerisaten vom ABS-Typ durch Emulsionspolymerisation nach dem Zulauf-Batch-Verfahren, **dadurch gekennzeichnet, dass** der zur Polymerisationsauslösung verwendete Initiator bzw. das verwendete Initiatorsystem portionsweise oder kontinuierlich derart zum Reaktionsgemisch zugegeben werden, dass im Verlauf der Reaktion ein Minimum an pro Zeitintervall zugegebenem Initiator bzw. Initiatorsystem durchlaufen wird und in mindestens 70% der Gesamtreaktionszeit die in jedem Zeitintervall zugegebene Initiatormenge mindestens einem Anteil ≥ 1 Gew.% der Gesamtinitiatormenge entspricht, wobei die Gesamtreaktionszeit n Zeitintervalle mit n = 3 bis 15 umfasst und jedes Zeitintervall 10 bis 80 Minuten lang ist.

3. Verfahren gemäß Ansprüchen 1 und 2, **dadurch gekennzeichnet, dass** das Minimum an pro Zeitintervall zugegebenem Initiator bzw. Initiatorsystem in der ersten Hälfte der Gesamtreaktionszeit durchlaufen wird.

4. Verfahren gemäß Ansprüchen 1 und 2, **dadurch gekennzeichnet, dass** das Minimum an pro Zeitintervall zugegebenem Initiator bzw. Initiatorsystem im ersten oder zweiten Drittel der Gesamtreaktionszeit durchlaufen wird.

5. Verfahren gemäß Ansprüchen 1 bis 4, **dadurch gekennzeichnet, dass** als Initiator Kaliumperoxodisulfat, Natriumperoxodisulfat, Ammoniumperoxodisulfat oder Mischungen daraus verwendet werden.

6. Verfahren gemäß Ansprüchen 1 bis 4, **dadurch gekennzeichnet, dass** als Initiatorsystem eine Kombination aus organischem Peroxid und Dextrose und/oder Ascorbinsäure(salz) verwendet wird.

7. Verfahren gemäß Anspruch 6, **dadurch gekennzeichnet, dass** als Peroxid Cumolhydroperoxid, p-Menthanhydroperoxid, tert.-Butylhydroperoxid oder Mischungen daraus verwendet werden.

8. Pfropfkautschukpolymerisat, erhältlich durch Emulsionspolymerisation nach dem Zulauf-Batch-Verfahren, **dadurch gekennzeichnet, dass** der zur Polymerisationsauslösung verwendete Initiator bzw. das verwendete Initiatorsystem portionsweise oder kontinuierlich derart zum Reaktionsgemisch zugegeben werden, dass im Verlauf der Reaktion ein Minimum an pro Zeitintervall zugegebenem Initiator bzw. Initiatorsystem durchlaufen wird und in mindestens 50% der Gesamtreaktionszeit die in jedem Zeitintervall zugegebene Initiatormenge mindestens einem Anteil ≥ 0,5 Gew.% der Gesamtinitiatormenge entspricht, wobei die Gesamtreaktionszeit n Zeitintervalle mit n = 3 bis 20 umfasst und jedes Zeitintervall 5 bis 90 Minuten lang ist.

9. Verwendungen der gemäß Ansprüchen 1 bis 8 erhältlichen Pfropfkautschukpolymerisate vom ABS-Typ zur Herstellung kautschukmodifizierter thermoplastischer Formmassen.

10. Thermoplastische Formmassen enthaltend Pfropfkautschukpolymerisate vom ABS-Typ gemäß der Ansprüche 1 bis 8.

11. Formteile, erhältlich aus thermoplastischen Formmassen gemäß Anspruch 1 bis 9.

## Claims

1. Process for producing graft rubber polymers of the ABS type by emulsion polymerization according to the fed batch method, **characterized in that** the initiator used for triggering the polymerization or the initiator system used is added to the reaction mixture in portions or continuously in such a way that in the course of the reaction a minimum of initiator or initiator system added per time interval is passed through and in at least 50% of the total reaction time the amount of initiator added in each time interval corresponds at least to a proportion ≥ 0.5 wt % of the total initiator amount, wherein the total reaction time comprises n time intervals with n = 3 to 20 and each time interval is 5 to 90 minutes long.

2. Process for producing graft rubber polymers of the ABS type by emulsion polymerization according to the fed batch method, **characterized in that** the initiator used for triggering the polymerization or the initiator system used is added to the reaction mixture in portions or continuously in such a way that in the course of the reaction a minimum of initiator or initiator system added per time interval is passed through and in at least 70% of the total reaction time the amount of initiator added in each time interval corresponds at least to a proportion ≥ 1 wt % of the total initiator amount, wherein the total reaction time comprises n time intervals with n = 3 to 15 and each time interval is 10 to 80 minutes long.

3. Process according to claims 1 and 2, **characterized in that** the minimum of initiator or initiator system added per time interval is passed through in the first half of the total reaction time.

4. Process according to claims 1 and 2, **characterized in that** the minimum of initiator or initiator system added per time interval is passed through in the first or second third of the total reaction time.

5. Process according to claims 1 to 4, **characterized in that** potassium peroxodisulphate, sodium peroxodisulphate, ammonium peroxodisulphate or mixtures thereof are used as initiator.

6. Process according to claims 1 to 4, **characterized in that** a combination of organic peroxide and dextrose and/or ascorbic acid (salt) is used as initiator system.

7. Process according to claim 6, **characterized in that** cumol hydroperoxide, p-menthane hydroperoxide, tert.-butyl hydroperoxide or mixtures thereof are used as peroxide.

8. Graft rubber polymer obtainable by emulsion polymerization according to the fed batch method, **characterized in that** the initiator used for triggering the polymerization or the initiator system used is added to the reaction mixture in portions or continuously in such a way that in the course of the reaction a minimum of initiator or initiator system added per time interval is passed through and in at least 50% of the total reaction time the amount of initiator added in each time interval corresponds at least to a proportion ≥ 0.5 wt % of the total initiator amount, wherein the total reaction time comprises n time intervals with n = 3 to 20 and each time interval is 5 to 90 minutes long.

9. Uses of the graft rubber polymers of the ABS type obtainable according to claims 1 to 8 to produce rubber-modified thermoplastic moulding materials.

10. Thermoplastic moulding materials containing graft rubber polymers of the ABS type according to claims 1 to 8.

11. Mouldings obtainable from thermoplastic moulding materials according to claims 1 to 9.

## Revendications

1. Procédé pour la préparation de polymères caoutchouc greffés du type ABS par polymérisation en émulsion d'après le procédé d'alimentation dans la charge, **caractérisé en ce que** l'initiateur, respectivement le système d'initiateur, utilisé pour le déclenchement de la polymérisation est ajouté au mélange réactionnel par portions ou en continu de telle sorte qu'au cours de la réaction, un minimum d'initiateur, respectivement de système d'initiateur, ajouté par intervalle de temps est traversé et **en ce que** dans au moins 50 % du temps total de réaction, la quantité d'initiateur ajoutée dans chaque intervalle de temps correspond au moins à une part de ≥ 0,5 % en poids de la quantité totale d'initiateur, le temps total de réaction comprenant n intervalles de temps, avec n = 3 à 20 et chaque intervalle de temps ayant une durée de 5 à 90 minutes.

2. Procédé pour la préparation de polymères caoutchouc greffés du type ABS par polymérisation en émulsion d'après le procédé d'alimentation dans la charge, **caractérisé en ce que** l'initiateur, respectivement le système d'initiateur, utilisé pour le déclenchement de la polymérisation est ajouté au mélange réactionnel par portions et en continu de telle sorte qu'au cours de la réaction un minimum d'initiateur, respectivement de système d'initiateur, ajouté par intervalle de temps est traversé et **en ce que** dans au moins 70 % du temps total de réaction, la quantité d'initiateur ajoutée dans chaque intervalle de temps correspond au moins à une part de ≥ 1 % en poids de la quantité totale d'initiateur, le temps total de réaction comprenant n intervalles de temps, avec n = 3 à 15 et chaque intervalle de temps ayant une durée de 10 à 80 minutes.

3. Procédé selon les revendications 1 et 2, **caractérisé en ce que** le minimum d'initiateur, respectivement de système d'initiateur, ajouté par intervalle de temps est traversé pendant la première moitié du temps total de réaction.

4. Procédé selon les revendications 1 et 2, **caractérisé en ce que** le minimum d'initiateur, respectivement de système d'initiateur ajouté par intervalle de temps est traversé pendant le premier ou le deuxième tiers du temps total de réaction.

5. Procédé selon les revendications 1 à 4, **caractérisé en ce que** du peroxydisulfate de potassium, du peroxydisulfate de sodium, du peroxydisulfate d'ammonium ou des mélanges de ceux-ci sont utilisés comme initiateur.

6. Procédé selon les revendications 1 à 4, **caractérisé en ce qu'**une combinaison de peroxyde organique et de dextrose et/ou d'acide ascorbique est utilisée comme système d'initiateur.

7. Procédé selon la revendication 6, **caractérisé en ce que** de l'hydroperoxyde de cumène, de l'hydroperoxyde de p-menthane, de l'hydroperoxyde de tert.-butyle ou des mélanges de ceux-ci sont utilisés comme peroxydes.

8. Polymère caoutchouc greffé pouvant être obtenu par polymérisation en émulsion d'après le procédé d'alimentation dans la charge, **caractérisé en ce que** l'initiateur, respectivement le système d'initiateur, utilisé pour le déclenchement de la polymérisation est ajouté au mélange réactionnel par portions ou en continu de telle sorte qu'au cours de la réaction un minimum d'initiateur, respectivement de système d'initiateur, ajouté par intervalle de temps est traversé et **en ce que** dans au moins 50 % du temps total de réaction, la quantité d'initiateur ajoutée dans chaque intervalle de temps correspond au moins à une part de ≥ 0,5 % en poids de la quantité totale d'initiateur, le temps total de réaction comprenant n intervalles de temps, avec n = 3 à 20 et chaque intervalle de temps ayant une durée de 5 à 90 minutes.

9. Utilisation des polymères caoutchouc greffés de type ABS pouvant être obtenus selon les revendications 1 à 8 à la préparation de matières de moulage thermoplastiques modifiées par caoutchouc.

10. Matières de moulage thermoplastique contenant des polymères caoutchouc greffés du type ABS selon les revendications 1 à 8.

11. Pièces moulées pouvant être obtenues en des matières de moulage thermoplastiques selon les revendications 1 à 9.
